(19) Europäisches Patentamt
European Patent Office
Office européen des brevets

(11) **EP 4 674 809 A1**

(12) **EUROPEAN PATENT APPLICATION**
published in accordance with Art. 153(4) EPC

(43) Date of publication:
**07.01.2026  Bulletin 2026/02**

(21) Application number: **24764022.0**

(22) Date of filing: **29.02.2024**

(51) International Patent Classification (IPC):
**C01B 32/168** $^{(2017.01)}$    **H01M 4/62** $^{(2006.01)}$

(52) Cooperative Patent Classification (CPC):
**C01B 32/168; H01M 4/62;** Y02E 60/10

(86) International application number:
**PCT/JP2024/007621**

(87) International publication number:
**WO 2024/181545 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2023  JP 2023030978**

(71) Applicant: **Mikuni Shikiso Kabushiki Kaisha Himeji-shi**
**Hyogo 671-0234 (JP)**

(72) Inventor: **HAYASHI, Yuichirou**
**Himeji-shi Hyogo 671-0234 (JP)**

(74) Representative: **SSM Sandmair**
**Patentanwälte Rechtsanwalt**
**Partnerschaft mbB**
**Joseph-Wild-Straße 20**
**81829 München (DE)**

(54) **CONDUCTIVE MATERIAL COMPOSITE PARTICLES, CONDUCTIVE MATERIAL FOR BATTERY ELECTRODES, AND METHOD FOR PRODUCING CONDUCTIVE MATERIAL COMPOSITE PARTICLES**

(57)    Electrically conductive material composite particles contain a carbon nanotube and a dispersant. The electrically conductive material composite particles have a maximum particle size of 150 μm or less, and a mixing amount of the dispersant is 1 part by mass or more and 200 parts by mass or less with respect to 100 parts by mass of the carbon nanotube.

**Description**

TECHNICAL FIELD

The present invention relates to electrically conductive material composite particles, an electrically conductive material for a cell electrode, and a method for producing electrically conductive material composite particles.

BACKGROUND ART

Conventionally, an electrode (positive electrode and negative electrode) of a lithium ion secondary cell is fabricated as an electrode coating film by coating a coating material (electrode paste) obtained by mixing an electrode active material, a binder for an electrode, and a carbon material onto a metal foil. The carbon material used as an electrically conductive material is difficult to be uniformly dispersed due to its small primary particle size and strong cohesive force. Therefore, it is known that since used as the electrode coating film, the electrically conductive material is unevenly distributed in the electrode coating film, a portion having poor electrical conductivity is locally generated in the electrode, so that the carbon material has poor cell performance when used as a cell.

Further, a carbon nanotube having the high electrical conductivity is known as such a carbon material. However, since the carbon nanotube is a cylindrical material having a nanometer-sized diameter, it has the large specific surface area, so that it is furthermore difficult to be uniformly dispersed.

Therefore, an electrically conductive material dispersion paste is proposed in which the dispersibility is improved by dispersing the electrically conductive material in a dispersion medium to obtain a liquid or paste-like electrically conductive material (ref: for example, Patent Document 1).

However, the electrically conductive material dispersion paste of Patent Document 1 needs to use a large amount of organic solvent having a high environmental load at the time of production, and furthermore, there is a disadvantage that it lacks long-term stability due to sedimentation properties and reaggregation properties.

For the purpose of reducing such an environmental load and improving the long-term stability, electrically conductive material composite particles in which the dispersion medium is removed from the electrically conductive material dispersion paste and the use of the organic solvent is suppressed is proposed (ref: for example, Patent Document 2).

Citation List

Patent Document

Patent Document 1: Japanese Unexamined Patent Publication No. 2003-308845
Patent Document 2: Japanese Unexamined Patent Publication No. 2012-9227

SUMMARY OF THE INVENTION

PROBLEM TO BE SOLVED BY THE INVENTION

However, the electrically conductive material composite particles of Patent Document 2 have the insufficient dispersibility of the electrically conductive material, and are unevenly distributed in the electrode coating film, so that the improvement of the cell performance is insufficient when used in the secondary cell.

That is, it is required that the electrically conductive material composite particles uniformly disperse the electrically conductive material in the electrode coating film, and furthermore, have the excellent cell performance as the electrically conductive material for a cell electrode when used in the secondary cell.

The present invention provides electrically conductive material composite particles capable of uniformly dispersing a carbon nanotube (electrically conductive material) in an electrode coating film, and furthermore, forming an electrically conductive material for a cell electrode having excellent cell performance when used in a secondary cell; an electrically conductive material for a cell electrode; and a method for producing electrically conductive material composite particles.

MEANS FOR SOLVING THE PROBLEM

The present invention [1] includes electrically conductive material composite particles containing a carbon nanotube and a dispersant, wherein the electrically conductive material composite particles have a maximum particle size of 150 $\mu$m or less, and a mixing amount of the dispersant is 1 part by mass or more and 200 parts by mass or less with respect to 100 parts by mass of the carbon nanotube.

The present invention [2] includes the electrically conductive material composite particles described in the above-described [1], wherein the mixing amount of the dispersant is 5 parts by mass or more with respect to 100 parts by mass of the carbon nanotube.

The present invention [3] includes the electrically conductive material composite particles described in the above-described [1] or [2], wherein in a particle size distribution of the electrically conductive material composite particles, a cumulative particle size (D90) at which a cumulative value based on volume from a small particle size-side is 90% is 100 $\mu$m or less.

The present invention [4] includes the electrically conductive material composite particles described in any one of the above-described [1] to [3], wherein in a particle size distribution of the electrically conductive material composite particles, a particle size distribution index (SPAN) calculated from the following formula (1) is 1.3 or less.

$$\text{Particle size distribution index (SPAN)} = (D90 - D10)/D50 \qquad (1)$$

D10: cumulative particle size at which the cumulative value based on volume from the small particle size-side is 10%
D50: cumulative particle size at which the cumulative value based on volume from the small particle size-side is 50%
D90: cumulative particle size at which the cumulative value based on volume from the small particle size-side is 90%

The present invention [5] includes the electrically conductive material composite particles described in any one of the above-described [1] to [4], wherein the dispersant is a nonionic dispersant.

The present invention [6] includes the electrically conductive material composite particles described in any one of the above-described [1] to [5], wherein an optical density OD of a coating film containing the electrically conductive material composite particles determined by the following optical density OD measurement method is 2.6 or more.

<Method for Measuring Optical Density OD>

Step 1: the electrically conductive material composite particles are added to 8.0% by mass N-methyl-2-pyrrolidone solution of polyvinylidene fluoride so that the carbon nanotube is 8.3% by mass in terms of solid content, and the obtained mixture is kneaded at 2000 rpm with a rotating and revolving mixer for one minute, thereby fabricating a binder mixture paste.

Step 2: the binder mixture paste fabricated in the Step 1 is coated onto a glass plate so as to have a film thickness after drying of 7.5 to 8.5 $\mu$m using an applicator, and dried at 100°C for 30 minutes to remove the N-methyl-2-pyrrolidone, thereby obtaining a coating film.

Step 3: the optical density OD of the fabricated coating film is measured using a spectral densitometer.

The present invention [7] includes an electrically conductive material for a cell electrode including the electrically conductive material composite particles described in any one of the above-described [1] to [6].

The present invention [8] includes a method for producing the electrically conductive material composite particles described in any one of the above-described [1] to [6]; the method including a preparation step of preparing an electrically conductive material liquid mixture containing the carbon nanotube, the dispersant, and a dispersion medium; a wet pulverization treatment step of pulverizing and dispersing the electrically conductive material liquid mixture to obtain an electrically conductive material dispersion paste; a dispersion medium removal step of removing a part or all of the dispersion medium of the electrically conductive material dispersion paste to fabricate unclassified electrically conductive material composite particles; and a step of classifying the unclassified electrically conductive material composite particles.

The present invention [9] includes the method for producing electrically conductive material composite particles described in the above-described [8] further including a foreign matter removal step of removing the particles of 50 $\mu$m or more in the electrically conductive material dispersion paste.

The present invention [10] includes the method for producing electrically conductive material composite particles described in the above-described [8] or [9], wherein in the dispersion medium removal step, a part or all of the dispersion medium of the electrically conductive material dispersion paste is removed by spray drying.

EFFECT OF THE INVENTION

The electrically conductive material composite particles of the present invention contain the carbon nanotube and the dispersant, the maximum particle size of the electrically conductive material composite particles is 150 $\mu$m or less, and the mixing amount of the dispersant is 1 part by mass or more and 200 parts by mass or less with respect to 100 parts by mass of the carbon nanotube. Therefore, the electrically conductive material composite particles can uniformly disperse the carbon nanotube in the electrode coating film, and furthermore, when the electrically conductive material for a cell electrode containing the electrically conductive material composite particles is used in the secondary cell, it has the excellent cell performance.

The electrically conductive material for a cell electrode of the present invention includes the electrically conductive material composite particles of the present invention. Therefore, when the electrically conductive material for a cell electrode of the present invention is used in the secondary cell, it has the excellent cell performance.

The method for producing electrically conductive material composite particles of the present invention includes the preparation step of preparing the electrically conductive material liquid mixture containing the carbon nanotube, the dispersant, and the dispersion medium; the wet pulverization treatment step of pulverizing and dispersing the electrically conductive material liquid mixture to obtain the electrically conductive material dispersion paste; the dispersion medium removal step of removing a part or all of the dispersion medium of the electrically conductive material dispersion paste to fabricate the unclassified electrically conductive material composite particles; and the step of classifying the unclassified electrically conductive material composite particles. Therefore, the produced electrically conductive material composite particles can uniformly disperse the carbon nanotube in the electrode coating film.

BRIEF DESCRIPTION OF THE DRAWINGS

FIG. 1 shows a flow chart for illustrating a method for producing electrically conductive material composite particles of the present invention.
FIG. 2 shows a scanning electron microscope (SEM) photograph of a cross section of an electrode coating film fabricated in Example 1.
FIG. 3 shows an energy dispersion-type X-ray spectrometer (EDS) analysis image of a cross section of an electrode coating film fabricated in Example 1.
FIG. 4 shows an SEM photograph of a cross section of an electrode coating film fabricated in Example 2.
FIG. 5 shows an EDS analysis image of a cross section of an electrode coating film fabricated in Example 2.
FIG. 6 shows an SEM photograph of a cross section of an electrode coating film fabricated in Example 3.
FIG. 7 shows an EDS analysis image of a cross section of an electrode coating film fabricated in Example 3.
FIG. 8 shows an SEM photograph of a cross section of an electrode coating film fabricated in Example 6.
FIG. 9 shows an EDS analysis image of a cross section of an electrode coating film fabricated in Example 6.
FIG. 10 shows an SEM photograph of a cross section of an electrode coating film fabricated in Comparative Example 3.
FIG. 11 shows an EDS analysis image of a cross section of an electrode coating film fabricated in Comparative Example 3.

DESCRIPTION OF EMBODIMENTS

1. Electrically Conductive Material Composite Particles

Electrically conductive material composite particles of the present invention are particles containing a carbon nanotube and a dispersant. Preferably, the electrically conductive material composite particles of the present invention are the particles consisting of the carbon nanotube and the dispersant.

<Carbon Nanotube>

The carbon nanotube is a carbon material used as an electrically conductive material, efficiently forms a network of the electrically conductive material in an electrode to improve electrical conductivity to an electrode active material, and has uniform and large nanospace.

The carbon nanotube is, for example, a tube-cylindrical electrically conductive material having a nanometer-sized diameter consisting of carbon only, and is not particularly limited. Examples thereof include known various carbon nanotubes. Specifically, an example thereof includes one described in All of NEDO report Carbon Nanotubes (issued on December 26, 2016, edited by New Energy and Industrial Technology Development Organization, THE NIKKAN KOGYO SHIMBUN, LTD.)

These carbon nanotubes may be used alone or in combination of two or more.

A diameter of the carbon nanotube is, for example, 1 nm or more, preferably 3 nm or more, more preferably 5 nm or more, and for example, 200 nm or less, preferably 170 nm or less, more preferably 150 nm or less.

The diameter of the carbon nanotube represents an average diameter of the carbon nanotube, and can be measured and calculated from images of 100 or more carbon nanotubes photographed with an SEM or a transmission electron microscope (TEM).

When the diameter of the carbon nanotube is the above-described upper limit or less, it is possible to suppress a decrease in the electrical conductivity in an electrode coating film. When the diameter of the carbon nanotube is the above-described lower limit or more, it is possible to suppress excessively high viscosity of an electrically conductive material dispersion paste and an electrode paste, and improve productivity and handleability.

The specific surface area of the carbon nanotube is, for example, 2000 $m^2$/100g or less, preferably 1500 $m^2$/100g or less, more preferably 1300 $m^2$/100g or less.

When the specific surface area of the carbon nanotube is the above-described upper limit or less, it is possible to suppress the excessively high viscosity of the electrically conductive material dispersion paste and the electrode paste, and furthermore, uniformly disperse the carbon nanotube.

The purity of the carbon nanotube is, for example, 90.0% or more, preferably 95.0% or more.

The purity of the carbon nanotube can be calculated based on the impurity content based on the ash content measured in conformity with JIS K1469 or JIS K6218 as impurity amount.

When the purity of the carbon nanotube is the above-described lower limit or more, it is possible to decrease a defect rate by preventing the occurrence of a short circuit of a cell due to the impurities.

Examples of the carbon nanotube include single-walled carbon nanotubes and multi-walled carbon nanotubes, and preferably, multi-walled carbon nanotubes are used.

Specifically, examples of the single-walled carbon nanotube include TUBALL (manufactured by OCSiAl, trade name), MEIJO eDIPS EC1.5 and MEIJO eDIPS EC1.5-P (manufactured by Meijo Nano Carbon Co., Ltd., trade name), HX-N-5 (manufactured by Guangdong Dowstone Technology Co., Ltd., trade name), and ZEONANO SG101 (manufactured by Zeon Corporation, trade name).

Specifically, examples of the multi-walled carbon nanotube include VGCF-X, VGCF-S, and VGCF-H (manufactured by Showa Denko K. K., trade name); NC7000 (manufactured by Nanocyl SA, trade name); the CSX series (manufactured by Cabot Corporation, trade name); the FT2000 series, the FT6000 series, the FT7000 series, and the FT9000 series (manufactured by Jiangsu Cnano Technology Co., Ltd., trade name); JENOTUBE 10B and JENOTUBE 6A (manufactured by JEIO, trade name); HX-N-1, HX-N-2, HX-N-3, and HX-N-4 (manufactured by Guangdong Dowstone Technology Co., Ltd., trade name); and K-Nanos230T, K-Nanos300T, and K-Nanos500T (manufactured by Kumho Petrochemical Co., Ltd., trade name). Preferably, VGCF-X, VGCF-S, and VGCF-H are used, more preferably, VGCF-H is used.

A content ratio of the carbon nanotube in the electrically conductive material composite particles is, for example, 30% by mass or more, preferably 50% by mass or more, more preferably 70% by mass or more, further more preferably 90% by mass or more, particularly preferably 95% by mass or more, and for example, below 100% by mass, preferably 98% by mass or less, more preferably 96% by mass or less.

When the content ratio of the carbon nanotube in the electrically conductive material composite particles is the above-described upper limit or less, it is possible to ensure the content ratio of the dispersant, and uniformly disperse the carbon nanotube in the electrode coating film. When the content ratio of the carbon nanotube in the electrically conductive material composite particles is the above-described lower limit or more, the electrical conductivity is excellent, and accordingly, it is possible to improve cell performance.

<Dispersant>

The dispersant is used to uniformly disperse the carbon nanotube in a dispersion medium, and prepare a stable dispersion element.

The dispersant can prevent reaggregation of the carbon nanotube after relaxing aggregation of the carbon nanotube, and uniformly distribute the carbon nanotube in the dispersion medium. Furthermore, even after forming the electrically conductive material composite particles, the dispersant uniformly disperses the carbon nanotube in the electrode coating film.

Examples of the dispersant include anionic dispersants, cationic dispersants, nonionic dispersants, and amphoteric dispersants. As the dispersant, from the viewpoint of not inhibiting movement of lithium ions, preferably, a nonionic dispersant is used.

As the nonionic dispersant, preferably, one which acts as a binder for an electrode after the formation of the electrode coating film and does not affect electric properties, or one which has a lower decomposition temperature and is removed by a heating treatment at the time of fabrication of the electrode is used.

Specifically, examples of the nonionic dispersant include polyvinylpyrrolidone, polyvinylbutyral, polyvinylidene fluoride, polytetrafluoroethylene, polyhexafluoropropylene, polyvinyl alcohol, polyvinyl acetal, polyvinyl ether, polyether, polyhydric alcohol ester, cellulose acetate, cellulose acetate butylate, methylcellulose, ethylcellulose, hydroxyethyl cellulose, ethyl hydroxyethyl cellulose, hydroxyethyl cellulose, hydroxypropyl cellulose, and hydroxypropyl methylcellulose. Preferably, methylcellulose and polyvinylpyrrolidone are used.

A weight average molecular weight of the dispersant is, for example, 1,000 or more, preferably 5,000 or more, more preferably 10,000 or more, and for example, 1,000,000 or less, preferably 300,000 or less, more preferably 200,000 or less, further more preferably 100,000 or less.

The weight average molecular weight of the dispersant can be measured using gel filtration chromatography. Measurement conditions for the gel filtration chromatography are, for example, as follows:

| | |
|---|---|
| Device: | high-speed liquid chromatography (Prominence, manufactured by Shimadzu Corporation) |
| Column: | OHpak SB-802.5HQ, manufactured by Resonac Corporation |
| | OHpak SB-804HQ, manufactured by Resonac Corporation |
| Detector: | RI (differential refractive index detector) |
| Eluent: | aqueous solution of 0.5 M NaCl |
| Flow rate: | 1.0 ml/min |
| Sample concentration: | 0.2 wt/vol% |
| Column temperature: | 40°C |

When the weight average molecular weight of the dispersant is the above-described upper limit or less, it is possible to suppress the excessively high viscosity of the electrically conductive material dispersion paste, ensure fluidity, and achieve the excellent handleability. When the weight average molecular weight of the dispersant is the above-described lower limit or more, it is possible to produce the electrically conductive material dispersion paste having the excellent dispersibility.

These dispersants may be used alone or in combination of two or more.

The content ratio of the dispersant in the electrically conductive material composite particles is, for example, above 0% by mass, preferably 2% by mass or more, more preferably 4% by mass or more, and for example, 70% by mass or less, preferably 50% by mass or less, more preferably 30% by mass or less, further more preferably 10% by mass or less, particularly preferably 5% by mass or less.

When the content ratio of the dispersant in the electrically conductive material composite particles is the above-described upper limit or less, it is possible to ensure the content ratio of the carbon nanotube, and achieve the excellent electrical conductivity. When the content ratio of the dispersant in the electrically conductive material composite materials is the above-described lower limit or more, it is possible to ensure the dispersibility of the carbon nanotube in the electrode coating film.

A mixing amount of the dispersant is 1.0 part by mass or more, preferably 3.0 parts by mass or more, more preferably 4.0 parts by mass or more, further more preferably 4.5 parts by mass or more, particularly preferably 5.0 parts by mass or more, and 200 parts by mass or less, preferably 100 parts by mass or less, more preferably 50 parts by mass or less, further more preferably 30 parts by mass or less, particularly preferably 10 parts by mass or less with respect to 100 parts by mass of the carbon nanotube.

When the mixing amount of the dispersant with respect to 100 parts by mass of the carbon nanotube is the above-described upper limit or less, it is possible to ensure the content ratio of the carbon nanotube, achieve the excellent electrical conductivity, and accordingly, achieve the excellent cell performance. When the mixing amount of the dispersant is the above-described lower limit or more, it is possible to uniformly disperse the carbon nanotube in the electrode coating film. Therefore, it is possible to retain the cell performance for a long period of time.

According to a method for producing electrically conductive material composite particles to be described later, a decomposition temperature of the dispersant is not exceeded, the dispersant is hardly removed even after each step, and a ratio to the electrically conductive material is retained. Therefore, in the preparation step, by setting the mixing amount of the dispersant with respect to 100 parts by mass of the carbon nanotube within the above-described range, in the electrically conductive material composite particles, it is also possible to set the mixing amount of the dispersant with respect to 100 parts by mass of the carbon nanotube within the above-described range.

However, since the ratio of the dispersant may vary depending on facilities to be used and the kind of the dispersant, if necessary, it is possible to measure and confirm the dispersant content in the electrically conductive material composite particles after the fabrication by the following method.

First, the electrically conductive material composite particles are heated until the dispersant is completely decomposed at a temperature at which the dispersant is decomposed and the electrically conductive material is not decomposed. Thereafter, it is possible to determine the mass of the dispersant from the mass difference before and after the heating. Specifically, by using a simultaneous thermogravimetry/ differential thermal analysis (TG-DTA, Bruker Japan K.K.), the electrically conductive material composite particles are retained at 100°C for one hour and the moisture is completely removed, and the mass is measured (mass after the retention at 100°C). Thereafter, the temperature is increased to 300°C at a rate of 5°C per minute to be retained for one hour, and the dispersant is decomposed to measure the mass (mass after the retention at 300°C). The mass after the retention at 300°C is the mass of the electrically conductive material only, and a difference between the mass after the retention at 100°C and the mass after the retention at 300°C is the mass of the dispersant in the electrically conductive material composite particles.

The mass of the dispersant is converted by an amount of an active component when the dispersant is dissolved or dispersed in another solvent or the like.

<Additive>

The electrically conductive material composite particles may contain another component. Examples of another component include additives such as pH adjusting agents, binders, thickeners, defoaming agents, surfactants, preservatives, and fungicides.

Examples of the pH adjusting agent include inorganic alkali (for example, potassium hydroxide and sodium hydroxide), organic alkali (for example, triethanolamine), inorganic acid (for example, hydrochloric acid, and sulfuric acid), and organic acid (for example, oxalic acid, acetic acid, and citric acid).

These pH adjusting agents may be used alone or in combination of two or more.

The mixing amount of the pH adjusting agent is not particularly limited and can be appropriately adjusted in accordance with a pH to be targeted.

Examples of the binder include water-soluble polymers and emulsion resins. Specifically, examples of the binder include starch, natural rubber, rosin, acrylic resins, epoxy resins, urethane resins, and melamine resins. Further, the starch, the natural rubber, and the rosin may be a modified product.

These binders may be used alone or in combination of two or more.

Examples of the thickener include natural polysaccharides and synthetic polymeric thickeners.

Examples of the natural polysaccharides include guar gum, locust bean gum, galactomannan, pectin, derivatives of pectin, psyllium seed gum, tamarind gum, xanthan gum, rheosan gum, rhamsan gum, welan gum, gellan gum, carrageenan, alginate, derivatives of alginate, and tragacanth gum.

Examples of the synthetic polymeric thickener include polyacrylic acid and a cross-linking-type copolymer of the polyacrylic acid.

These thickeners may be used alone or in combination of two or more.

2. Method for Producing Electrically Conductive Material Composite Particles

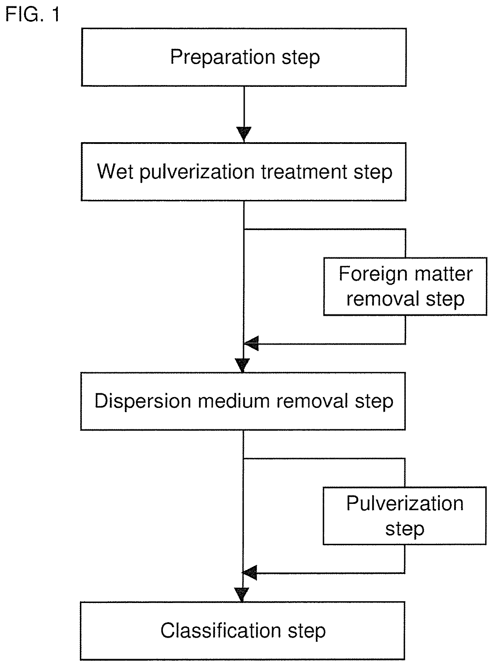

As one embodiment, a method for producing electrically conductive material composite particles of the present invention is described with reference to FIG. 1. The method for producing electrically conductive material composite particles of the present invention includes a preparation step of preparing an electrically conductive material liquid mixture containing the carbon nanotube, the dispersant, and the dispersion medium; a wet pulverization treatment step of pulverizing and dispersing the electrically conductive material liquid mixture to obtain the electrically conductive material dispersion paste; a dispersion medium removal step of removing a part or all of the dispersion medium of the electrically conductive material dispersion paste to fabricate the unclassified electrically conductive material composite particles; and a step of classifying the unclassified electrically conductive material composite particles. Furthermore, a foreign matter removal step of removing the particles of 50 μm or more in the electrically conductive material dispersion paste may be also included.

<Preparation Step>

The dispersant is weighed so that the dispersant content in the electrically conductive material composite particles is the above-described amount, and is added to the dispersion medium to be stirred, and the mixture is sufficiently dissolved or dispersed. Next, the carbon nanotube is added to the obtained solution or dispersion liquid to be stirred, thereby obtaining the electrically conductive material liquid mixture.

In the preparation step, before the addition of the carbon nanotube, a pretreatment such as dry pulverization and chemical modification of the surface of carbon nanotube may be carried out in order to improve the dispersibility of the carbon nanotube as long as it does not damage the electrical conductivity. The pretreatment is not particularly limited, and examples thereof include pulverization such as ball mill, hammer mill, dry bead mill, and jet mill with an airflow pulverizer; pulverization with a crusher mill; chemical gas phase precipitation methods; atomic layer deposition methods; flotation cohesive methods; and surface modification by strong acids, ozone, microwaves, plasma, supercritical fluids, and mechanochemicals.

In addition, when the additive is added, it is added at the same time as the dispersant to such a degree that the function of each raw material is not inhibited in accordance with its application. The additive may be also added as the solution and the dispersion liquid.

A stirring method is not particularly limited as long as it is a known method, and an example thereof includes a method of stirring using a commercially available stirrer and mixer.

As the dispersion medium, it is not particularly limited as long as it is the dispersion medium which is capable of dispersing the carbon nanotube and being removed in the dispersion medium removal step to be described later. Preferably, the dispersion medium which uniformly dissolves the dispersant to be used is used.

Examples of the dispersion medium include water, methanol, ethanol, N-methyl-2-pyrrolidone, and methyl ethyl ketone, and preferably, water and N-methyl-2-pyrrolidone are used. From the viewpoint of safety and convenience in the dispersion medium removal step and environmental consideration, more preferably, water is used.

From the viewpoint of adjusting drying degree and film formability of the coating film, a solvent other than the above-described dispersion medium may be added to the dispersion medium.

Examples of the solvent include alcohols, alkyl ether alcohols, glycols, and triols. Examples of the alcohols include methanol, ethanol, and isopropyl alcohol. Examples of the alkyl ether alcohols include ethylene glycol monomethyl ether, diethylene glycol monoethyl ether, diethylene glycol monobutyl ether, triethylene glycol monobutyl ether, and propylene glycol monobutyl ether. Examples of the glycols include ethylene glycol, diethylene glycol, triethylene glycol, tetraethylene glycol, propylene glycol, dipropylene glycol, tripropylene glycol, and polyethylene glycol having a number average molecular weight of 2000 or less. An example of the triols includes glycerin.

These solvents may be used alone or in combination of two or more.

The content ratio of the dispersion medium in the electrically conductive material liquid mixture is, for example, 50.0% by mass or more, preferably 60.0% by mass or more, more preferably 70.0% by mass or more, further more preferably 80.0% by mass or more, particularly preferably 90% by mass or more, and for example, 99.9% by mass or less, preferably 99.0% by mass or less, more preferably 97.0% by mass or less, further more preferably 95.0% by mass or less, particularly preferably 93% by mass or less.

When the content ratio of the dispersion medium in the electrically conductive material liquid mixture is the above-described lower limit or more, it is possible to ensure the fluidity of the electrically conductive material dispersion paste, and easily adjust the maximum particle size of an aggregate of the carbon nanotube and the viscosity of the electrically conductive material dispersion paste in the wet pulverization treatment step.

The content ratio of the carbon nanotube (solid content) in the electrically conductive material liquid mixture is, for example, 0.1% by mass or more, preferably 1% by mass or more, more preferably 3% by mass or more, further more preferably 5% by mass or more, particularly preferably 7% by mass or more, and for example, 50% by mass or less, preferably 30% by mass or less, more preferably 20% by mass or less, further more preferably 10% by mass or less.

The content ratio of the dispersant (solid content) in the electrically conductive material liquid mixture is, for example, above 0% by mass, preferably 0.1% by mass or more, more preferably 0.2% by mass or more, further more preferably 0.3% by mass or more, and for example, 30% by mass or less, preferably 10% by mass or less, more preferably 5% by mass or less, further more preferably 3% by mass or less, particularly preferably 1% by mass or less.

<Wet Pulverization Treatment Step>

The electrically conductive material liquid mixture is subjected to the wet pulverization treatment. Specifically, the electrically conductive material liquid mixture is pulverized and dispersed until the viscosity of the electrically conductive material dispersion paste described below and the maximum particle size of the aggregate of the carbon nanotube described below, thereby obtaining the electrically conductive material dispersion paste.

The wet pulverization treatment is not particularly limited as long as it is a treatment in which the pulverization and the dispersion are carried out until the viscosity of the electrically conductive material dispersion paste described below and the maximum particle size of the aggregate of the carbon nanotube described below, and an example thereof includes a treatment using a commercially available wet pulverization treatment device and wet dispersion device.

Examples of a device used in the wet pulverization treatment include wet media dispersers and media-less dispersers. Examples of the wet media disperser include ball mills, sand grinders, DYNO-MILLS, spike mills, DCP mills, basket mills, and paint conditioners. Examples of the media-less disperser include nanomizers, Altimizers, thin-film spin system high-speed mixers, roll mills, colloid mills, high-pressure dispersers, homogenizers, in-line mixers, and ultrasonic dispersers. In the wet pulverization treatment, two or more kinds of devices may be also used in combination.

In the electrically conductive material dispersion paste, the maximum particle size of the aggregate of the carbon nanotube is, for example, below 50 $\mu$m, preferably 40 $\mu$m or less, more preferably 30 $\mu$m or less.

The maximum particle size of the aggregate of the carbon nanotube in the electrically conductive material dispersion paste can be confirmed by observation at an arbitrary magnification capable of confirming the secondary aggregation of the carbon nanotube using a commercially available optical microscope in a state where the electrically conductive material dispersion paste is diluted with the dispersion medium by 1000 times and is thinned by a slide glass and a cover glass.

When the maximum particle size of the aggregate of the carbon nanotube in the electrically conductive material dispersion paste is the above-described upper limit or less, it is possible to uniformly distribute the electrode active material and the carbon nanotube in the electrode coating film, and achieve the excellent cell performance.

The viscosity of the electrically conductive material dispersion paste is, for example, 10000 mPa·s or less, preferably 5000 mPa·s or less, more preferably 2000 mPa·s or less, further more preferably 1000 mPa·s or less, particularly preferably 500 mPa·s or less.

When the viscosity of the electrically conductive material dispersion paste is the above-described upper limit or less, the fluidity is improved, and the handleability is excellent.

<Foreign Matter Removal Step>

Although the pulverization is carried out until the aggregate of the carbon nanotube in the electrically conductive material dispersion paste is below 50 $\mu$m by the wet pulverization treatment, three is a case where the foreign matter including the aggregate of 50 $\mu$m or more of the carbon nanotube remains. Therefore, the method for producing electrically conductive material composite particles may also include a step of removing the foreign matter of 50 $\mu$m or more in the electrically conductive material dispersion paste after fabricating the electrically conductive material dispersion paste. The foreign matter is any material of 50 $\mu$m or more contained in the electrically conductive material dispersion paste, and includes the aggregate of the carbon nanotube.

By including the foreign matter removal step, when used as the electrode paste, it is possible to suppress the formation of a short circuit by contact of coarse particles to each other on the electrode coating film, and decrease a risk of occurrence of internal short circuit in a cell.

The method for removing the foreign matter is not particularly limited, and examples thereof include filtration with a sieve and a method of delivering the electrically conductive material dispersion paste using a liquid delivery pump for passing through a filter or a magnetic separator.

<Dispersion Medium Removal Step>

The unclassified electrically conductive material composite particles are fabricated by removing a part or all of the dispersion medium of the electrically conductive material dispersion paste to be made into particles.

The method for removing the dispersion medium is not particularly limited, and an example thereof includes a method of drying using a freeze dryer, a spray dryer, an air flow dryer, a hot air dryer, and a fluidized layer dryer. Specifically, examples of such a drying method include spray drying using a spray dryer and hot air drying using a hot air dryer. Preferably, spray drying is used. In other words, in the dispersion medium removal step, preferably, a part or all of the dispersion medium of the electrically conductive material dispersion paste is removed by the spray drying.

[Spray Drying]

The spray drying is a method in which the electrically conductive material dispersion paste is sprayed using a sprayer, and the sprayed droplets are instantaneously dried by hot air. By using the spray drying, the electrically conductive material composite particles are formed at the same time as the drying, and furthermore, the size of the particles can be adjusted. Further, the time for the dispersion medium removal step can be shortened, and furthermore, the production facilities can be simplified.

The spray dryer used in the spray drying is not particularly limited as long as the solution and the dispersion liquid are sprayed into a gas and dried, and examples thereof include disk-type (centrifugal spray-type) spray dryers and spray-type spray dryers.

In the spray dryer, it is possible to adjust the particle size of the electrically conductive material composite particles by adjusting, for example, a delivery amount (rate) of the solution and the dispersion liquid, a supply amount of the compressed air, a drying temperature to be described later, and the number of rotations of the disk in the disk-type spray dryer.

The number of rotations of the disk in the disk-type spray dryer is, for example, 3000 rpm or more, preferably 5000 rpm or more, and for example, 50000 rpm or less, preferably 30000 rpm or less, more preferably 25000 rpm or less.

When the number of rotations of the disk per minute is increased in the disk-type spray dryer, the droplets become smaller and the particle size becomes smaller. On the other hand, when the number of rotations of the disk per minute is decreased, the droplets become larger and the particle size becomes larger.

[Hot Air Drying]

The hot air drying is a method of spreading the electrically conductive material dispersion paste thinly, and applying the hot air in this state to be dried. In the hot air drying, since only the drying is carried out, it is necessary to separately include a pulverization step to be described later.

In the dispersion medium removal step, when the dispersion medium of the electrically conductive material dispersion paste is removed by the spray drying, the hot air drying, or the like, a drying rate can be increased by increasing a heating temperature, and the unclassified electrically conductive material composite particles after the drying can be adjusted to a moisture content to be described later.

The heating temperature is, for example, 80°C or more, preferably 100°C or more, and for example, 300°C or less, preferably 250°C or less.

When the heating temperature is the above-described lower limit or more, it is possible to reliably adjust the moisture content to a desired value in the unclassified electrically conductive material composite particles after the drying. Further, when the heating temperature is the above-described upper limit or less, it is possible to suppress deterioration and decomposition of a material.

The moisture content of the unclassified electrically conductive material composite particles after the drying is, for example, 4% by mass or less, preferably 3% by mass or less, more preferably 2% by mass or less.

When the moisture content of the unclassified electrically conductive material composite particles is the above-described upper limit or less, when used in the electrode paste, it is possible to suppress a decrease in solubility of the binder for an electrode (for example, polyvinylidene fluoride), fabricate the uniform coating film, and accordingly, suppress the decrease in strength of the electrode coating film and the decrease in adhesiveness between the electrode coating film and the metal foil. Furthermore, when used in the lithium ion secondary cell, it is possible to suppress the deterioration of a member in the cell. In other words, it is possible to suppress the decrease in the cell performance.

The moisture content can be measured using a commercially available moisture meter such as a halogen lamp heating-type moisture meter (MA-120, manufactured by SHINKO DENSHI CO., LTD.).

Drying time is not particularly limited. When the moisture content is measured by the above-described method, and as long as the moisture content remaining is not the above-described upper limit or less, it is possible to extend the drying time.

[Pulverization Step]

In the dispersion medium removal step, when the drying method (for example, hot air drying) other than the method capable of simultaneously carrying out the drying such as spray drying and particle formation is used, a step of pulverizing the electrically conductive material dispersion paste after the drying may be also included.

The pulverization method is not particularly limited, and an example thereof includes pulverization using a hammer mill, a crusher, a mixer, a mortar, and a ball mill.

[Classification Step]

The unclassified electrically conductive material composite particles can be obtained as the electrically conductive material composite particles having a specific range of particle size by classification.

The classification method is not particularly limited, and examples thereof include sieving and wind classification. Preferably, sieving is used.

In the sieving, the plurality of sieves having different nominal aperture sizes in conformity with JIS8801-1 are stacked in order with the one having a larger aperture size on top. After the electrically conductive material composite particles are supplied into the topmost sieve, the unclassified electrically conductive material composite particles can be classified for each particle size by shaking with an electromagnetic sieve shaker (manufactured by Fritsch Japan Co., Ltd.) for 30 minutes. Next, of the particles remaining on each sieve, by taking out the particles passing through the sieve having the desired aperture size, it is possible to obtain the electrically conductive material composite particles which are classified into a desired maximum particles size or less.

The maximum particle size of the electrically conductive material composite particles is 150 $\mu$m or less.

In the electrically conductive material composite particles, of the nominal aperture sizes of the sieve in conformity with JIS8801-1, when the particles passing through the predetermined aperture size only are taken out, the maximum particle size of the electrically conductive material composite particles is defined as the size of the aperture size or less. Specifically, when the electrically conductive material composite particles passing through the sieve having the aperture size of 150 $\mu$m only are taken out, the maximum particle size thereof is 150 $\mu$m or less.

When the maximum particle size of the electrically conductive material composite particles is the above-described upper limit or less, the coarse particles are removed, the electrically conductive material composite particles can obtain the sufficient dispersion force, and accordingly, in the electrode coating film, the carbon nanotube can be uniformly dispersed and the sufficient electrical conductivity can be imparted to the electrode active material. As a result, it is possible to improve the cell performance.

An average particle size of the electrically conductive material composite particles is, for example, 5 $\mu$m or more, preferably 10 $\mu$m or more, more preferably 15 $\mu$m or more, further more preferably 20 $\mu$m or more, particularly preferably 22 $\mu$m or more, most preferably 30 $\mu$m or more, and for example, 80 $\mu$m or less, preferably 70 $\mu$m or less, more preferably 60 $\mu$m or less, further more preferably 58 $\mu$m or less, particularly preferably 55 $\mu$m or less.

When the average particle size of the electrically conductive material composite particles is within the above-described range, the electrically conductive material composite particles can obtain the sufficient dispersion force, and accordingly, in the electrode coating film, the carbon nanotube can be uniformly dispersed and the sufficient electrical conductivity can be imparted to the electrode active material. As a result, it is possible to improve the cell performance.

The average particle size of the electrically conductive material composite particles is the arithmetic average of the largest of the diameters passing through a central point of each particle, and can be determined as follows. A measurement method is not limited to this as long as it is possible to obtain the same results. Further, the average particle size of the electrically conductive material composite particles is the same as a cumulative particle size (D50) at which a cumulative value based on volume from a small particle size-side is 50% in a particle size distribution of the electrically conductive material composite particles.

Specifically, an electrically conductive sample table is used so as to prevent electrical charging, and the electrically conductive material composite particles are sprayed on the sample table so that the particles are not overlapped with each other. Next, the average particle size of the electrically conductive material composite particles can be determined by calculating the average value from the numerical value of the diameter which is analyzed by the 300 or more particles using a scanning electron microscope (FlexSEM1000, manufactured by Hitachi High-Tech Corporation) and a particles analysis software (AZtec, manufactured by Oxford Instruments).

In the particle size distribution of the electrically conductive material composite particles, the cumulative particle size (D10) at which the cumulative value based on volume from the small particle size-side is 10% is, for example, 1 $\mu$m or more, preferably 5 $\mu$m or more, more preferably 10 $\mu$m or more, further more preferably 15 $\mu$m or more, particularly preferably 20 $\mu$m or more, and for example, 100 $\mu$m or less, preferably 80 $\mu$m or less, more preferably 60 $\mu$m or less, further more preferably 40 $\mu$m or less.

In the particle size distribution of the electrically conductive material composite particles, the cumulative particle size (D90) at which the cumulative value based on volume from the small particle size-side is 90% is, for example, 10 $\mu$m or more, preferably 20 $\mu$m or more, more preferably 30 $\mu$m or more, further more preferably 40 $\mu$m or more, and for example, 130 $\mu$m or less, preferably 110 $\mu$m or less, more preferably 100 $\mu$m or less, further more preferably 80 $\mu$m or less.

In the particle size distribution of the electrically conductive material composite particles, when the cumulative particle size (D90) at which the cumulative value based on volume from the small particle size-side is 90% is the above-described upper limit or less, the electrically conductive material composite particles can obtain the sufficient dispersion force, and accordingly, in the electrode coating film, it is possible to uniformly disperse the carbon nanotube, and impart the sufficient electrical conductivity to the electrode active material. As a result, it is possible to improve the cell performance.

In the particle size distribution of the electrically conductive material composite particles, the cumulative particle size (D95) at which the cumulative value based on volume from the small particle size-side is 95% is, for example, 20 $\mu$m or more, preferably 30 $\mu$m or more, more preferably 40 $\mu$m or more, further more preferably 45 $\mu$m or more, and for example, 150 $\mu$m or less, preferably 120 $\mu$m or less, more preferably 100 $\mu$m or less.

D10, D90, and D95 can be also calculated using the devices and the methods used in determining the above-described average particle size (D50).

In the particle size distribution of the electrically conductive material composite particles, a particle size distribution index (SPAN) calculated from the following formula (1) is, for example, 1.5 or less, preferably 1.3 or less, more preferably 1.2 or less, further more preferably 1.1 or less, and for example, 0.3 or more, preferably 0.5 or more, more preferably 0.8 or more.

$$\text{Particle size distribution index (SPAN)} = (\text{D90-D10})/\text{D50} \qquad (1)$$

D10: cumulative particle size at which the cumulative value based on volume from the small particle size-side is 10%
D50: cumulative particle size at which the cumulative value based on volume from the small particle size-side is 50%
D90: cumulative particle size at which the cumulative value based on volume from the small particle size-side is 90%

In the particle size distribution of the electrically conductive material composite particles, when the particle size distribution index (SPAN) calculated from the above-described (1) is within the above-described range, the particle size distribution is sharp, that is, a distribution width of the particle size distribution is narrow. That is, the electrically conductive material composite particles are more uniform particles, and it is possible to obtain the even higher dispersion force. Accordingly, it is possible to uniformly disperse the carbon nanotube in the electrode coating film, and impart the sufficient electrical conductivity to the electrode active material. As a result, it is possible to improve the cell performance.

The bulk density of the electrically conductive material composite particles is, for example, 0.01 g/ml or more, preferably 0.05 g/ml or more, more preferably 0.10 g/ml or more.

When the bulk density of the electrically conductive material composite particles is the above-described lower limit or more, it is possible to suppress scattering of the electrically conductive material composite particles in a production factory, and suppress the cost of transportation and storage since dust collecting equipment is not required.

The bulk density can be measured in conformity with JIS R-1628-1997.

3. Electrically Conductive Material for Cell Electrode

The electrically conductive material for a cell electrode of the present invention includes the above-described electrically conductive material composite particles.

Examples of the electrically conductive material for a cell electrode include electrode paste and electrode coating films.

The electrode paste can be fabricated by kneading, for example, the above-described electrically conductive material composite particles, the electrode active material, the binder for an electrode, and the dispersion medium for an electrode.

The electrode active material is not particularly limited, and a known positive electrode active material or negative electrode active material can be used. An example of the positive electrode active material includes a lithium composite oxide. An example of the negative electrode active material includes a carbon material.

The binder for an electrode is not particularly limited, and a known binder for an electrode may be used. Examples of the binder for an electrode include polyvinylidene fluoride, carboxy methylcellulose, styrene butadiene rubber, polytetrafluoroethylene, and polyacrylic acid, and preferably, polyvinylidene fluoride is used.

The dispersion medium for an electrode is not particularly limited, and a known dispersion medium for an electrode may be used. Examples of the dispersion medium for an electrode include nonaqueous solvents and aqueous solvents. An example of the nonaqueous solvent includes N-methyl-2-pyrrolidone. An example of the aqueous solvent includes water.

An additive commonly used in the cell electrode applications may be, if necessary, added to the electrode paste.

An example of the method for kneading the electrode paste includes a method for kneading using a commercially available stirrer or mixer.

The electrode coating film can be fabricated, for example, by coating the electrode paste to a metal substrate, a glass substrate, or the like to be dried. The electrode coating film may be used as a positive electrode or a negative electrode depending on the active material contained.

A film thickness of the electrode coating film can be arbitrarily set in accordance with the performance of the cell. The film thickness of the electrode coating film is, for example, 500 $\mu$m or less, preferably 300 $\mu$m or less, more preferably 200 $\mu$m or less, and for example, 1 $\mu$m or more, preferably 10 $\mu$m or more, more preferably 50 $\mu$m or more.

When the electrode coating film is fabricated, the drying time and the drying temperature of the electrode paste may be arbitrarily set in accordance with the film thickness of the electrode coating film.

The optical density OD of the coating film containing the electrically conductive material composite particles is, for example, 2.0 or more, preferably 2.3 or more, more preferably 2.6 or more.

The optical density OD of the coating film containing the electrically conductive material composite particles can be measured by the following method. In addition, in measuring the optical density OD, the fabricated coating film containing the electrically conductive material composite particles does not contain the electrode active material, unlike the above-described electrode coating film.

<Method for Measuring Optical Density OD>

Step 1: the electrically conductive material composite particles are added to 8.0% by mass N-methyl-2-pyrrolidone solution of the polyvinylidene fluoride so that the carbon nanotube is 8.3% by mass in terms of solid content, and the mixture is kneaded at 2000 rpm with a rotating and revolving mixer for one minute, thereby fabricating a binder mixture paste.

Step 2: the binder mixture paste fabricated in the Step 1 is coated onto a glass plate using an applicator so as to have the film thickness after drying of 7.5 to 8.5 $\mu$m, and dried at 100°C for 30 minutes, thereby obtaining the coating film obtained by removing the N-methyl-2-pyrrolidone.

Step 3: the optical density OD of the fabricated coating film is measured using a spectral densitometer.

The optical density OD of the coating film is obtained by measuring spectral transmittance of the coating film and indicating a degree of absorbance of light in logarithm. When the carbon nanotube is uniformly dispersed in the coating film, the light transmitting as a whole of the coating film is decreased, and the optical density OD of the coating film becomes larger. Further, when the carbon nanotube is uniformly dispersed in the coating film, in a case where the electrode active material is blended to be used as the electrode coating film, sufficient electronic electrically conductivity can be imparted to the electrode active material, and the cell performance is excellent. In other words, the large optical density OD of the coating film means the excellent cell performance. On the other hand, when the carbon nanotube is not uniformly dispersed in the coating film, a portion where the carbon nanotube aggregates and is unevenly distributed is generated in the coating film. Since the light transmits through such a portion, the light transmitting through the coating film as a whole is increased, and the optical density OD of the coating film is decreased. In addition, when the carbon nanotube is not uniformly dispersed in the coating film, in a case where the electrode active material is blended and used as the electrode coating film, the sufficient electronic electrically conductivity cannot be imparted to the electrode active material, so that the cell performance is poor. In other words, the small optical density OD of the coating film means the poor cell performance. Thus, there is a correlation between the optical density OD of the coating film and the cell performance, and the excellent optical density OD obtained by forming the coating film of the electrically conductive material composite particles has the excellent cell performance.

The electrically conductive material composite particles in which the optical density OD of the coating film containing the electrically conductive material composite particles shows the above-described lower limit or more can uniformly disperse the carbon nanotube in the electrode coating film, and accordingly, the cell performance is excellent.

The fabricated positive electrode and negative electrode can be wound around with the separator and housed in a cell can together with an electrolytic solution, so that it is possible to fabricate the cell. In order to prevent an increase in the pressure inside the cell, and the occurrence of the overcharging and overdischarging, if necessary, overcurrent prevention elements such as fuses and PTC elements, expanded metal, lead plates, or the like may be also provided. Further, examples of the shape of the cell can include coin-type, button-type, sheet-type, cylindrical-type, square-type, and flat-type.

<Function and Effect>

The electrically conductive material composite particles of the present invention contain the carbon nanotube and the dispersant, the maximum particle size thereof is 150 $\mu$m or less, the mixing amount of the dispersant is 1 part by mass or more and 200 parts by mass or less with respect to 100 parts by mass of the carbon nanotube. Therefore, in the electrode coating film, it is possible to uniformly disperse the carbon nanotube, and further, when used in the secondary cell, it is possible to form the electrically conductive material for a cell electrode having the excellent cell performance.

Specifically, the electrically conductive material composite particles of the present invention have the maximum particle size of 150 $\mu$m or less. The coarse particles in the electrically conductive material composite particles are removed, the electrically conductive material composite particles can obtain the sufficient dispersion force, and accordingly, it is possible to uniformly disperse the carbon nanotube in the electrode coating film, and impart the sufficient electrical conductivity to the electrode active material. As a result, it is possible to improve the cell performance of the secondary cell.

Therefore, the electrically conductive material for a cell electrode containing the electrically conductive material composite particles of the present invention has the excellent cell performance when used in the secondary cell.

Examples

Next, the present invention is further described based on Examples and Comparative Examples below. The present invention is however not limited by these Examples and Comparative Examples. Further, the specific numerical values in mixing ratio (content), property value, and parameter used in the following description can be replaced with upper limit values (numerical values defined as "or less" or "below") or lower limit values (numerical values defined as "or more" or "above") of corresponding numerical values in mixing ratio (content), property value, and parameter described in the above-described "DESCRIPTION OF EMBODIMENTS".

<Preparation of Electrically Conductive Material Composite Particles>

Example 1

First, 0.4 parts by mass of methylcellulose (dispersant) (weight average molecular weight of 35,000) was added to 91.6 parts by mass of ion-exchanged water (dispersion medium) to be sufficiently dissolved with the stirrer, thereby obtaining a dispersant solution. Next, 8 parts by mass of carbon nanotube (VGCF-H, manufactured by Showa Denko K.K.) were added to 92 parts by mass of the obtained dispersant solution to be mixed with the stirrer, thereby obtaining the electrically conductive material liquid mixture. The obtained electrically conductive material liquid mixture was wet-pulverized using the bead mill until the particles of 50 μm or more disappeared, thereby obtaining the electrically conductive material dispersion paste. The obtained electrically conductive material dispersion paste was filtered with a mesh having the aperture size of 50 μm, thereby removing the foreign matter. The electrically conductive material dispersion paste after removing the foreign matter was dried and made into particles using a disk-type spray dryer. As the conditions of the disk-type spray dryer, an entry temperature of 210°C and the number of rotations of the disk of 20000 rpm were used. Next, the obtained unclassified electrically conductive material composite particles were classified using an electromagnetic sieve shaker (manufactured by Fritsch Japan Co., Ltd.), thereby obtaining the electrically conductive material composite particles of Example 1 having the maximum particle size of 150 μm or less.

Example 2

The electrically conductive material composite particles of Example 2 were prepared in the same manner as the electrically conductive material composite particles of Example 1, except that the number of rotations of the disk was changed to 7000 rpm.

Example 3

The electrically conductive material composite particles of Example 3 were prepared in the same manner as the electrically conductive material composite particles of Example 1, except that polyvinylpyrrolidone (weight average molecular weight of 66,800) was used as the dispersant.

Example 4

The electrically conductive material dispersion paste obtained in the same manner as Example 1 was dried under the conditions of 100°C and 12 hours using the hot air dryer, and the obtained electrically conductive material dispersion paste after the drying was pulverized with a cutter mixer. Next, the obtained unclassified electrically conductive material composite particles were classified using the electromagnetic sieve shaker (manufactured by Fritsch Japan Co., Ltd.), and the electrically conductive material composite particles of Example 4 having the maximum particle size of 40 μm or less were obtained.

Example 5

The electrically conductive material composite particles of Example 5 were prepared in the same manner as the electrically conductive material composite particles of Example 4, except that the electrically conductive material composite particles having the maximum particle size of 150 μm or less were obtained without passing through the sieve having the aperture size of 40 μm.

Example 6

The electrically conductive material composite particles of Example 6 were prepared in the same manner as the electrically conductive material composite particles of Example 4, except that the electrically conductive material composite particles having the maximum particle size of 150 μm or less were obtained.

Examples 7 and 8

The electrically conductive material composite particles of Examples 7 and 8 were prepared in the same manner as the electrically conductive material composite particles of Example 1, except that the mixing amount of the dispersion medium and the mixing amount of the dispersant were changed to those shown in Table 1.

Comparative Example 1

The electrically conductive material composite particles of Comparative Example 1 were prepared in the same manner as the electrically conductive material composite particles of Example 2, except that the electrically conductive material composite particles having the maximum particle size of 500 μm or less were obtained.

Comparative Example 2

The electrically conductive material composite particles of Comparative Example 2 were prepared in the same manner as the electrically conductive material composite particles of Example 4, except that the electrically conductive material composite particles having the maximum particle size of 500 μm or less were obtained.

Comparative Example 3

The carbon nanotube (VGCF-H, manufactured by Showa Denko K.K.) which was an electrically conductive material raw material was used instead of the electrically conductive material composite particles.

<Evaluation>

[Viscosity]

The viscosity of each of the electrically conductive material dispersion paste fabricated in Examples and Comparative Examples was measured using a B-type viscometer (TVB10M-type viscometer, manufactured by Toki Sangyo Co., Ltd.). The results are shown in Table 1. Examples other than Examples 3, 7, and 8 and Comparative Examples 1 and 2 were the same as the electrically conductive material dispersion paste. Further, Comparative Example 3 was not measured since no electrically conductive material dispersion paste was fabricated.

[Moisture Content]

The moisture content of each of the electrically conductive material composite particles of Examples and Comparative Examples (in Comparative Example 3, electrically conductive material raw material) was measured using the halogen lamp heating-type moisture meter (MA-120, manufactured by SHINKO DENSHI CO., LTD.). The results are shown in Table 1.

[Particle Size]

The cumulative particle size (D10) at which the cumulative value based on volume from the small particle size-side was 10%, the cumulative particle size (D50) at which the cumulative value based on volume from the small particle size-side was 50%, the cumulative particle size (D90) at which the cumulative value based on volume from the small particle size-side was 90%, and the cumulative particle size (D95) at which the cumulative value based on volume from the small particle size-side was 95% of each of the electrically conductive material composite particles of Examples and Comparative Examples except for Comparative Example 3 were calculated using the scanning electron microscope (FlexSEM1000, manufactured by Hitachi High-Tech Corporation) and the particles analysis software (AZtec, manufactured by Oxford Instruments). The results are shown in Table 1.

[Particle Size Distribution Index]

In the particle size distribution of each of the electrically conductive material composite particles of Examples and Comparative Examples except for Comparative Example 3, the particle size distribution index (SPAN) was calculated from the following formula (1). The particle size distribution index was evaluated based on the following criteria. The results are shown in Table 1.

$$\text{Particle size distribution index (SPAN)} = (D90-D10)/D50$$

D10: cumulative particle size at which the cumulative value based on volume from the small particle size-side is 10%
D50: cumulative particle size at which the cumulative value based on volume from the small particle size-side is 50%
D90: cumulative particle size at which the cumulative value based on volume from the small particle size-side is 90%

{Criteria}

o: 1.2 or less

△: above 1.2 and 1.3 or less
×: above 1.3

[Optical Density OD]

The optical density OD of the coating film containing each of the electrically conductive material composite particles of Examples and Comparative Examples (in Comparative Example 3, electrically conductive material raw material) was measured by the method to be described later. The optical density OD was evaluated based on the following criteria. The results are shown in Table 1.

{Criteria}

○: 2.6 or more
×: below 2.6

Each of the electrically conductive material composite particles of Examples and Comparative Examples (in Comparative Example 3, electrically conductive material raw material) was mixed with a solution obtained by being diluted to 8.0% by mass of polyvinylidene fluoride (KF polymer W#7200, manufactured by KUREHA CORPORATION) as the binder for an electrode using the N-methyl-2-pyrrolidone as the dispersion medium for an electrode so that the carbon nanotube (electrically conductive material) was 8.3% by mass of the total in terms of solid content. The obtained mixture was kneaded at 2000 rpm with the rotating and revolving mixer (THINKY MIXER, manufactured by THINKY CORPORATION) for one minute, thereby fabricating the binder mixture paste. The binder mixture paste was coated onto the glass plate using the applicator so as to have the film thickness after the drying of 7.5 to 8.5 $\mu$m, and dried at 100°C for 30 minutes using the hot air dryer, thereby obtaining the coating film obtained by removing the dispersion medium for an electrode. The optical density OD of the obtained coating film was measured using the spectral densitometer (x-rite, manufactured by Videojet X-Rite K.K.).

[Dispersion State]

Each of the electrically conductive material composite particles of Examples and Comparative Examples (in Comparative Example 3, electrically conductive material raw material), $LiNi_{1/3}Co_{1/3}Mn_{1/3}O_2$ (HED NCM111 1100, manufactured by BASF TODA Battery Materials LLC) as the electrode active material, and polyvinylidene fluoride (Solef5130, manufactured by Solvay Japan, Ltd.) as the binder for an electrode were diluted with the N-methyl-2-pyrrolidone so that the total sum of the solid content was 70% by mass. The electrically conductive material composite particles, the electrode active material, and the binder for an electrode were blended so as to have the solid content of 1:98:1 (mass ratio). Thereafter, the diluted solution was kneaded at 2000 rpm with the rotating and revolving mixer for two minutes, thereby obtaining the electrode paste. Next, the electrode paste was coated onto a polyethylene terephthalate film using an applicator, then, dried using the hot air dryer at 100°C for 30 minutes, and the N-methyl-2-pyrrolidone was removed, thereby obtaining the electrode coating film having the film thickness within the range of 90 $\mu$m to 120 $\mu$m. A cross section of the electrode coating film was exposed using a cross-section cutter for fabrication of an SEM sample, and a dispersion state of the electrically conductive material composite particles in the electrode coating film was photographed at 500 times magnification using the scanning electron microscope (FlexSEM1000, manufactured by Hitachi High-Tech Corporation) and the energy dispersion-type X-ray spectrometer (AZtecEnergy x-act, manufactured by Oxford Instruments). The dispersion state of the electrically conductive material composite particles in the coating film was evaluated based on the following criteria. The results are shown in Table 1.

{Criteria}

○: uniformly dispersed
×: unevenly distributed

Since in each of the electrically conductive material composite particles of Examples and Comparative Examples, the dispersant contained in the electrically conductive material composite particles functioned as the binder for an electrode on the electrode coating film, the dispersant contained in the electrically conductive material composite particles was regarded as the binder for an electrode, and a mass ratio was adjusted.

[Initial Cell Performance]

A coin-type secondary cell of CR2032-type (diameter of 20 mm and height of 3.2 mm) was fabricated in a manner to be described later using each of the electrically conductive material composite particles of Examples and Comparative Examples (in Comparative Example 3, electrically conductive material raw material). Each of the fabricated secondary cells using each of the electrically conductive material composite particles of Examples and Comparative Examples (in Comparative Example 3, electrically conductive material raw material) was charged to 4.3 V at constant current and constant voltage of 0.2 C at 25°C, and thereafter, discharged to 3.0 V at constant current of 0.2, thereby measuring "0.2 C Initial Discharge Capacity". Further, a total of one cycle of charge and discharge in which each of the second cells was charged to 4.3 V at constant current and constant voltage of 1.0 C at 25°C, and thereafter, further discharged to 3.0 V at constant current of 1.0 C was carried out, the first cycle of charge and discharge at 1.0 C ("1.0 C Initial Discharge Capacity") was measured, and the initial effective capacity was determined based on the obtained initial discharge capacity (mAh). The results are shown in Table 1. The effective capacity refers to a ratio of an actual discharge capacity when a theoretical capacity (mass of electrode coating film (g) × mixing ratio of electrode active material in electrode coating film × theoretical capacity of electrode active material per 1 g) was 100%.

{Criteria of Initial Effective Capacity}

    ○: 80% or more
    △: 70% or more and below 80%
    ×: below 70%

$LiNi_{1/3}Co_{1/3}Mn_{1/3}O_2$ (HED NCM111 1100, manufactured by BASF TODA Battery Materials LLC) as the electrode active material, and each of the electrically conductive material composite particles of Examples and Comparative Examples (in Comparative Example 3, electrically conductive material raw material) were mixed into a solution obtained by dissolving the polyvinylidene fluoride (Solef5130, manufactured by Solvay Japan, Ltd.) as the binder for an electrode in the N-methyl-2-pyrrolidone, and the viscosity of a dilute solution was adjusted with the N-methyl-2-pyrrolidone so as to have the coatable viscosity between 60% and 80% of the total sum of the solid content, thereby obtaining the electrode paste. The electrically conductive material composite particles, the electrode active material, and the binder for an electrode were blended so as to have the solid content of 1:97:2 (mass ratio). The electrode paste was coated onto an aluminum foil having the thickness of 20 μm, dried at 100°C for 30 minutes, and pressed so as to have the thickness of the electrode coating film of 50 to 60 μm, thereby obtaining the electrode coating film. Next, the fabricated electrode coating film was punched into a shape of φ14 mm with a coin-type punching machine, and the electrode density was calculated from the mass and the thickness of the electrode coating film obtained by subtracting the aluminum foil from the punched electrode coating film. Of the electrode coating films, the electrode coating film having the basis weight of 3.0 to 4.0 $mAh/cm^2$ and the electrode density of 2.9 to 3.1 g/ml was defined as the coating film for a positive electrode. Next, a metal lithium foil which was punched into a circular shape of φ16 mm was used for the negative electrode facing the positive electrode when the secondary cell was made. The coating film for a positive electrode, a separator (Selion P2010, material: polypropylene, manufactured by CS Tech Co., Ltd.) punched into the circular shape of φ17 mm, and a metal lithium foil (manufactured by Honjo Metal Co., Ltd.) faced each other, and the inside of the cell was filled with the electrolytic solution (1.0M LiPF6 EC: DEC (1:1v/v%), manufactured by Kishida Chemical Co., Ltd.), thereby fabricating a CR2032-type coil cell.

[Retention Rate of Cell Performance]

In the second cell fabricated in the same manner as the description above using each of the electrically conductive material composite particles of Examples and Comparative Examples (in Comparative Example 3, electrically conductive material raw material), the total of 30 cycles of charge and discharge in which each of the fabricated secondary cells was charged to 4.3 V at constant current and constant voltage of 1.0 C at 25°C, and thereafter, further discharged to 3.0 V at constant current of 1.0 C was carried out, and the discharge capacity after the 20 and 30 cycles was measured. Then, by comparing "1.0 C Initial Discharge Capacity" to the discharge capacity after the 20 and 30 cycles, the capacity retention rate was calculated, and evaluated by the following criteria. The results are shown in Table 1.

{Criteria of Capacity Retention Rate}

∘: 75% or more
△: 40% or more and below 75%.
×: below 40%

[Table 1]

Table 1

| No. | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 |
|---|---|---|---|---|---|---|---|---|---|---|---|---|
| Formulation of Electrically Conductive Material Dispersion Paste (Parts by Mass) | Ion Exchanged Water | 91.60 | 91.60 | 91.60 | 91.60 | 91.60 | 91.60 | 91.64 | 91.68 | 91.60 | 91.60 | - |
| | Carbon Nanotube | 8.00 | 8.00 | 8.00 | 8.00 | 8.00 | 8.00 | 8.00 | 8.00 | 8.00 | 8.00 | 100.00 |
| | Methyl Cellulose | 0.40 | 0.40 | - | 0.40 | 0.40 | 0.40 | 0.36 | 0.32 | 0.40 | 0.40 | - |
| | Polyvinyl Pyrrolidone | - | - | 0.40 | - | - | - | - | - | - | - | - |
| Mixing Amount of Dispersant to 100 Parts by Mass of Carbon Nanotube (parts by mass) | | 5.00 | 5.00 | 5.00 | 5.00 | 5.00 | 5.00 | 4.50 | 4.00 | 5.00 | 5.00 | - |
| Drying Conditions | Drying Method | Spray Drying | Spray Drying | Spray Drying | Hot Air Drying | Hot Air Drying | Hot Air Drying | Spray Drying | Spray Drying | Spray Drying | Hot Air Drying | - |
| | Number of Rotations of Disk (rpm)[1] | 20000 | 7000 | 20000 | - | - | - | 20000 | 20000 | 7000 | - | - |
| Electrically Conductive Material Dispersion Paste | Viscosity (mPa·s) | 407 | 407 | 35 | 407 | 407 | 407 | 446 | 618 | 407 | 407 | - |
| Sieve Size of Electrically Conductive Material Composite Particles | Upper Limit of Particle Size (μm)[2] | 150 | 150 | 150 | 40 | 150 | 150 | 150 | 150 | 500 | 500 | - |
| | Lower Limit of Particle Size (μm) | - | - | - | - | 40 | - | - | - | - | - | - |
| Electrically Conductive Material Composite Particles | Particle Size D10 (μm) | 11 | 23 | 12 | 35 | 38 | 36 | 11 | 11 | 34 | 37 | - |
| | Particle Size D50 (μm) | 18 | 53 | 23 | 47 | 57 | 53 | 19 | 18 | 67 | 59 | - |
| | Particle Size D90 (μm) | 31 | 77 | 40 | 77 | 99 | 94 | 34 | 34 | 126 | 129 | - |
| | Particle Size D95 (μm) | 41 | 87 | 48 | 86 | 112 | 111 | 29 | 39 | 165 | 153 | - |
| | Particle Size Distribution Index (SPAN) | 1.11 | 1.02 | 1.22 | 0.89 | 1.07 | 1.09 | 1.21 | 1.28 | 1.37 | 1.56 | - |
| | Evaluation of Particle Size Distribution Index | ○ | ○ | △ | ○ | ○ | ○ | △ | △ | × | × | - |
| | Moisture Rate (%) | 2.5 | 1.2 | 2.7 | 1.3 | 1.3 | 1.3 | 1.5 | 1.8 | 1.2 | 1.3 | 1.2 |
| Coating Film | OD | 3.13 | 2.88 | 2.61 | 2.62 | 2.61 | 2.68 | 2.69 | 2.92 | 2.54 | 2.04 | 0.84 |
| | Evaluation of OD | ○ | ○ | ○ | ○ | ○ | ○ | ○ | ○ | × | × | × |
| Electrode Coating Film | Evaluation of Dispersion State | ○ | ○ | ○ | ○ | ○ | ○ | ○ | ○ | × | × | × |
| Cell | 0.2C Initial Effective Capacity (%) | 85 | 89 | 88 | 87 | 86 | 86 | 77 | 76 | 78 | 82 | 68 |
| | 0.2C Evaluation of Initial Effective Capacity | ○ | ○ | ○ | ○ | ○ | ○ | △ | △ | △ | ○ | × |
| | 1.0C Initial Effective Capacity (%) | 85 | 90 | 84 | 76 | 85 | 85 | 81 | 81 | 82 | 86 | 68 |
| | 1.0C Evaluation of Initial Effective Capacity | ○ | ○ | ○ | ∧ | ○ | ○ | ○ | ○ | ○ | ○ | × |
| | 1.0C 20 Cycle Capacity Retention Rate (%) | 98 | 90 | 96 | 92 | 96 | 96 | 73 | 70 | 72 | 63 | 50 |
| | 1.0C Evaluation of 20 Cycle Capacity Retention Rate | ○ | ○ | ○ | ○ | ○ | ○ | △ | △ | △ | × | × |
| | 1.0C 30 Cycle Capacity Retention Rate (%) | 76 | 69 | 80 | 81 | 90 | 78 | 43 | 46 | 33 | 38 | 26 |
| | 1.0C Evaluation of 30 Cycle Capacity Retention Rate | ○ | △ | ○ | ○ | ○ | ○ | △ | △ | × | × | × |

1) Conditions of only spray drying

2) Maximum particle size is upper limit of particle size or less

<Consideration>

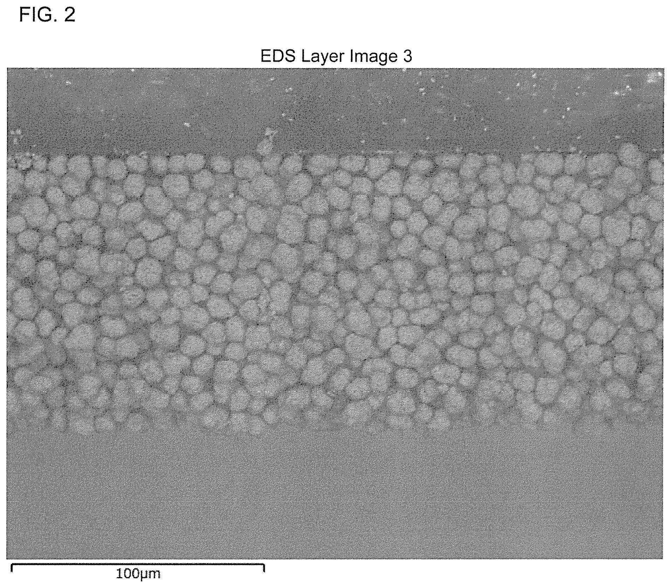

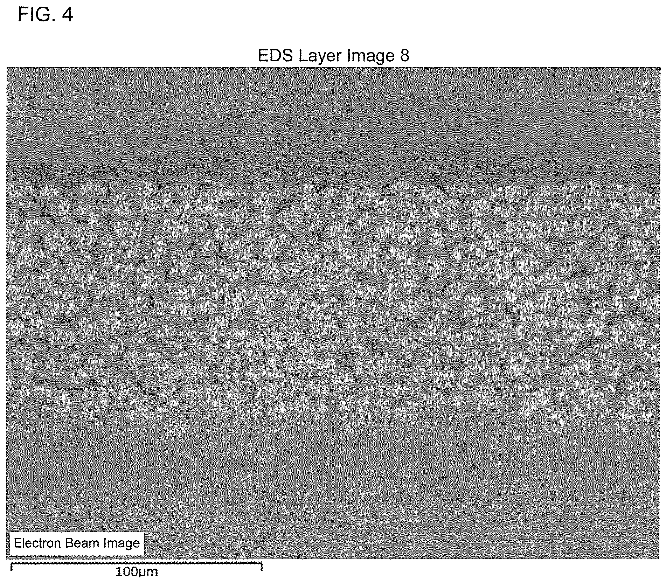

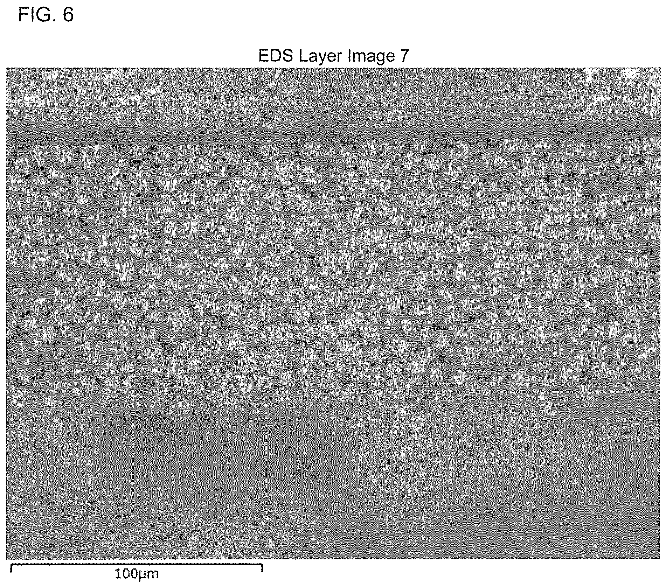

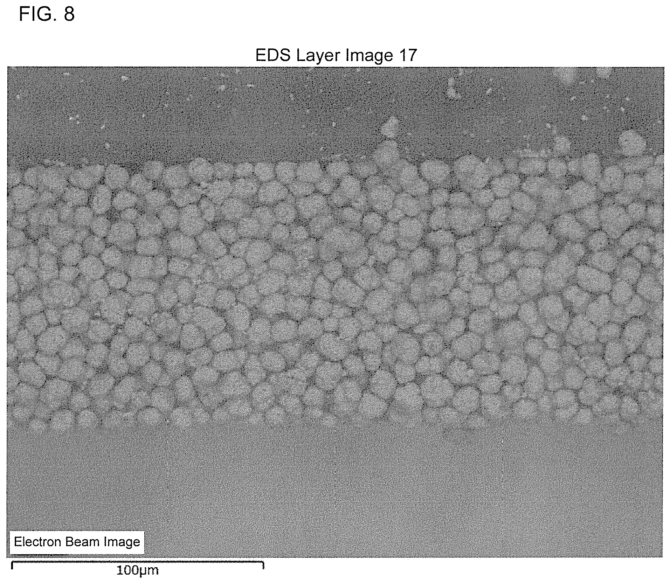

In SEM observation images of FIGS. 2, 4, 6, 8, and 10, a spherical material shown in white was the electrode active material, and a gray fog attached to its periphery showed the carbon nanotube as the electrically conductive material.

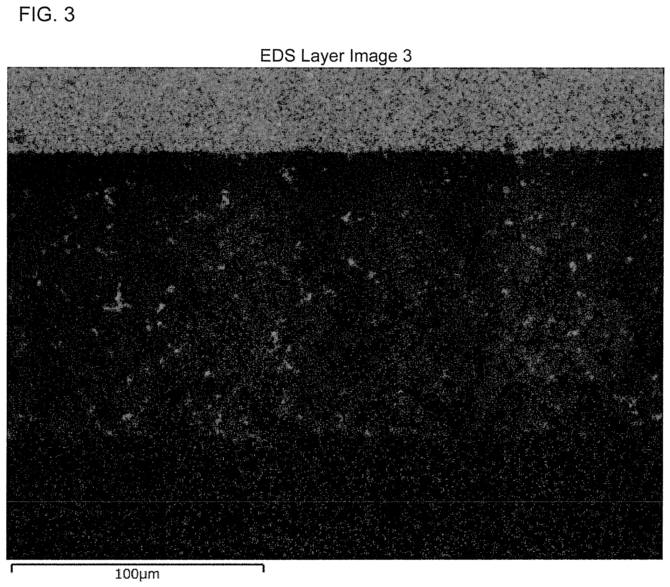

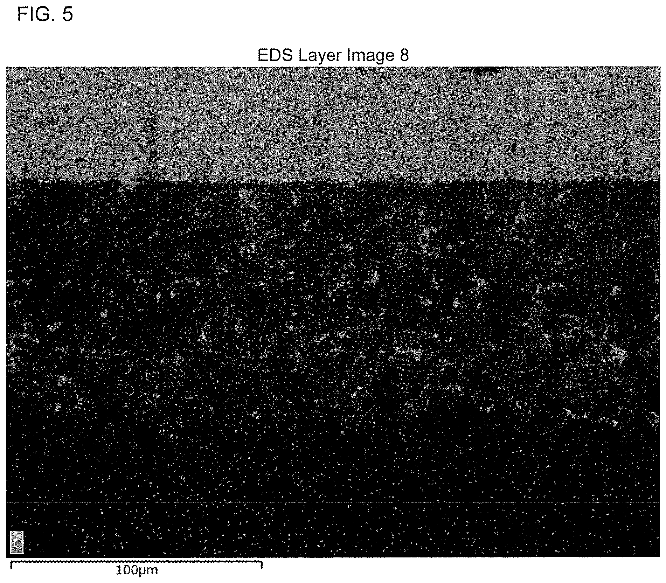

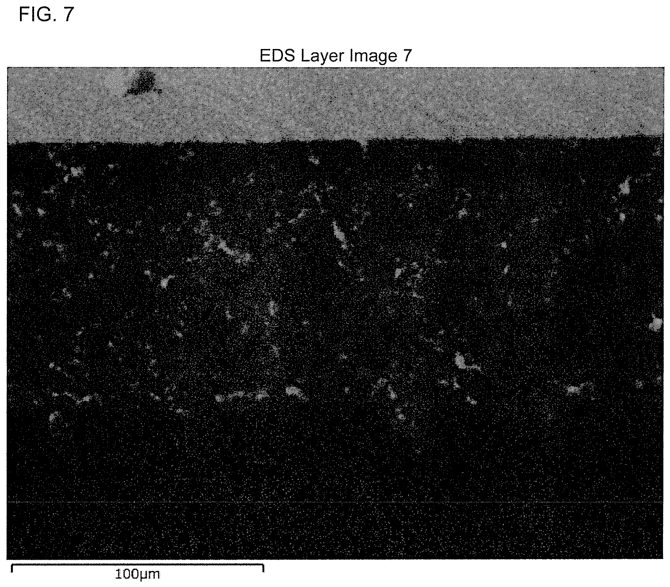

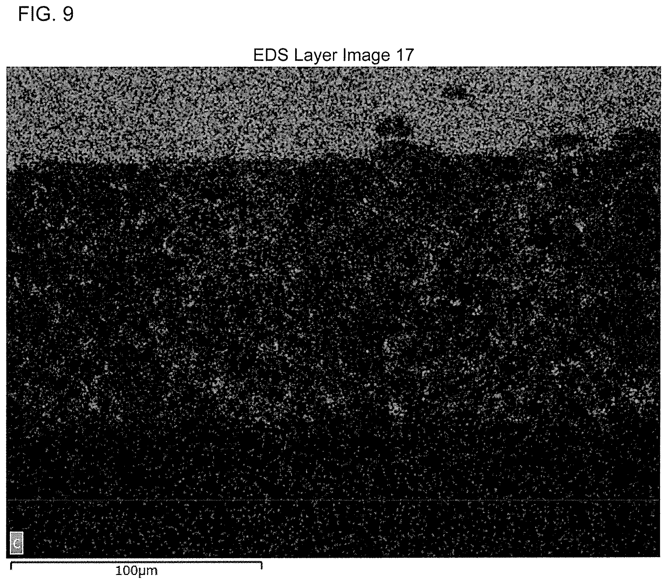

In EDS analysis images of FIGS. 3, 5, 7, 9, and 11, the carbon nanotube as the electrically conductive material was visualized in white.

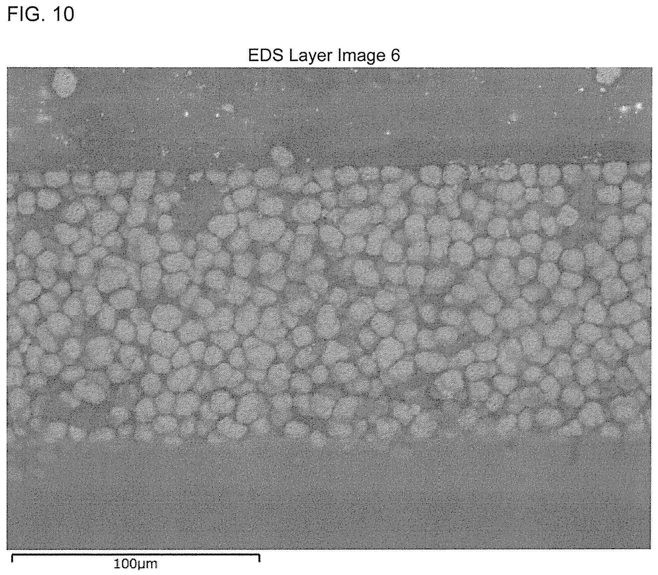

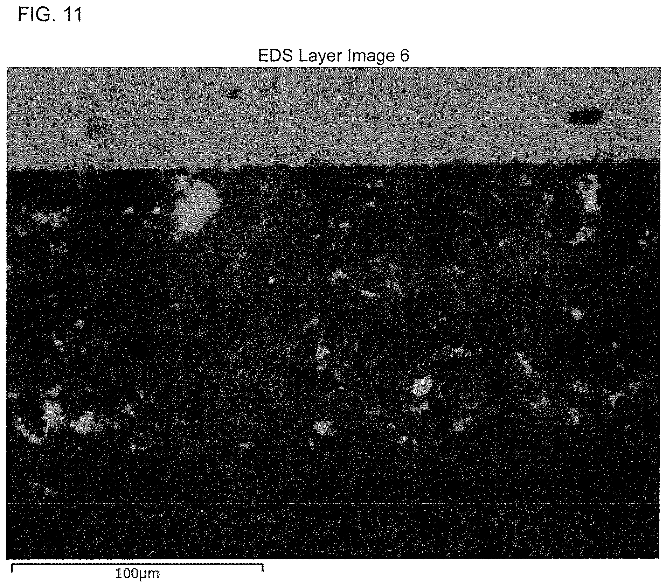

In FIGS. 2 to 9 showing Examples 1 to 3 and 6, the carbon nanotube as the electrically conductive material was widely and uniformly distributed between the electrode active materials. Alternatively, it can be read that in FIGS. 10 and 11 showing Comparative Example 3, the coarse particles or the aggregate of the carbon nanotube were formed, and the dispersion was not sufficient.

In this manner, by using the electrically conductive material composite particles of the present invention, it is possible to obtain the electrode coating film having the excellent dispersibility and in which the carbon nanotubes were uniformly dispersed.

As described above, in the electrode coating film using the electrically conductive material composite particles of the present invention, the carbon nanotubes are uniformly dispersed between the active materials in the coating film. In this manner, it is possible to impart the sufficient electronic electrically conductivity to a lot of active materials, and when used in the cell, it is possible to improve the cell performance. Further, since the uneven distribution and the aggregation of the electrically conductive material did not occur, and the coarse particles and the foreign matter did not exist, thermal runaway and the early decrease in the cell performance were not generated caused by local electrification and short circuit. As a result, it is possible to retain the cell performance for a long period of time.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

INDUSTRIAL APPLICATION

The electrically conductive material composite particles of the present invention are preferably used in an electrically conductive material for a cell electrode. That is, the electrically conductive material for a cell electrode using the electrically conductive material composite particles of the present invention is preferably used in a second cell.

**Claims**

1. Electrically conductive material composite particles comprising:

   a carbon nanotube and a dispersant, wherein
   the electrically conductive material composite particles have a maximum particle size of 150 $\mu$m or less, and
   a mixing amount of the dispersant is 1 part by mass or more and 200 parts by mass or less with respect to 100 parts by mass of the carbon nanotube.

2. The electrically conductive material composite particles according to claim 1, wherein
   the mixing amount of the dispersant is 5 parts by mass or more with respect to 100 parts by mass of the carbon nanotube.

3. The electrically conductive material composite particles according to claim 1, wherein
   in a particle size distribution of the electrically conductive material composite particles, a cumulative particle size (D90) at which a cumulative value based on volume from a small particle size-side is 90% is 100 $\mu$m or less.

4. The electrically conductive material composite particles according to claim 1, wherein

   in a particle size distribution of the electrically conductive material composite particles, a particle size distribution index (SPAN) calculated from the following formula (1) is 1.3 or less.
   Particle size distribution index (SPAN)= (D90- D10)/ D50 (1)
   D10: cumulative particle size at which the cumulative value based on volume from the small particle size-side is 10%
   D50: cumulative particle size at which the cumulative value based on volume from the small particle size-side is 50%

D90: cumulative particle size at which the cumulative value based on volume from the small particle size-side is 90%

5. The electrically conductive material composite particles according to claim 1, wherein the dispersant is a nonionic dispersant.

6. The electrically conductive material composite particles according to claim 1, wherein

an optical density OD of a coating film containing the electrically conductive material composite particles determined by the following optical density OD measurement method is 2.6 or more.
<Method for Measuring Optical Density OD>
Step 1: the electrically conductive material composite particles are added to 8.0% by mass N-methyl-2-pyrrolidone solution of polyvinylidene fluoride so that the carbon nanotube is 8.3% by mass in terms of solid content, and the obtained mixture is kneaded at 2000 rpm with a rotating and revolving mixer for one minute, thereby fabricating a binder mixture paste.
Step 2: the binder mixture paste fabricated in the Step 1 is coated onto a glass plate so as to have a film thickness after drying of 7.5 to 8.5 μm using an applicator, and dried at 100°C for 30 minutes to remove the N-methyl-2-pyrrolidone, thereby obtaining a coating film.
Step 3: the optical density OD of the fabricated coating film is measured using a spectral densitometer.

7. An electrically conductive material for a cell electrode comprising:
the electrically conductive material composite particles according to any one of claims 1 to 6.

8. A method for producing the electrically conductive material composite particles according to any one of claims 1 to 6;
the method comprising:

a preparation step of preparing an electrically conductive material liquid mixture containing the carbon nanotube, the dispersant, and a dispersion medium;
a wet pulverization treatment step of pulverizing and dispersing the electrically conductive material liquid mixture to obtain an electrically conductive material dispersion paste;
a dispersion medium removal step of removing a part or all of the dispersion medium of the electrically conductive material dispersion paste to fabricate unclassified electrically conductive material composite particles; and
a step of classifying the unclassified electrically conductive material composite particles.

9. The method for producing electrically conductive material composite particles according to claim 8 further comprising:
a foreign matter removal step of removing the particles of 50 μm or more in the electrically conductive material dispersion paste.

10. The method for producing electrically conductive material composite particles according to claim 8, wherein in the dispersion medium removal step, a part or all of the dispersion medium of the electrically conductive material dispersion paste is removed by spray drying.

FIG. 1

```
┌─────────────────────────────────────┐
│          Preparation step            │
└─────────────────────────────────────┘
                   │
                   ▼
┌─────────────────────────────────────┐
│    Wet pulverization treatment step  │
└─────────────────────────────────────┘
                   │
                   │           ┌──────────────────┐
                   │           │  Foreign matter  │
                   │           │   removal step   │
                   │           └──────────────────┘
                   │◄──────────────────┘
                   ▼
┌─────────────────────────────────────┐
│    Dispersion medium removal step    │
└─────────────────────────────────────┘
                   │
                   │           ┌──────────────────┐
                   │           │   Pulverization  │
                   │           │       step       │
                   │           └──────────────────┘
                   │◄──────────────────┘
                   ▼
┌─────────────────────────────────────┐
│          Classification step         │
└─────────────────────────────────────┘
```

FIG. 2

EDS Layer Image 3

100μm

FIG. 3

EDS Layer Image 3

100μm

FIG. 4

EDS Layer Image 8

Electron Beam Image

100µm

FIG. 5

EDS Layer Image 8

100μm

FIG. 6

EDS Layer Image 7

100μm

FIG. 7

EDS Layer Image 7

100µm

FIG. 8

EDS Layer Image 17

Electron Beam Image

100µm

FIG. 9

EDS Layer Image 17

100µm

FIG. 10

EDS Layer Image 6

100μm

FIG. 11

EDS Layer Image 6

100µm

## INTERNATIONAL SEARCH REPORT

| | International application No. |
|---|---|
| | **PCT/JP2024/007621** |

**A. CLASSIFICATION OF SUBJECT MATTER**

*C01B 32/168*(2017.01)i; *H01M 4/62*(2006.01)i
FI: C01B32/168; H01M4/62 Z

According to International Patent Classification (IPC) or to both national classification and IPC

**B. FIELDS SEARCHED**

Minimum documentation searched (classification system followed by classification symbols)

C01B32/168; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-79342 A (DR.GOO KK) 28 May 2020 (2020-05-28)<br>entire text | 1-10 |
| A | JP 2015-214450 A (NIPPON ZEON CO.) 03 December 2015 (2015-12-03)<br>entire text | 1-10 |
| A | JP 2013-193916 A (NIPPON ZEON CO.) 30 September 2013 (2013-09-30)<br>entire text | 1-10 |
| A | JP 2019-119672 A (NITTA CORPORATION) 22 July 2019 (2019-07-22)<br>entire text | 1-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/007621**

| Patent document cited in search report | | | Publication date (day/month/year) | Patent family member(s) | | | Publication date (day/month/year) |
|---|---|---|---|---|---|---|---|
| JP | 2020-79342 | A | 28 May 2020 | WO | 2020/100842 | A1 | |
| | | | | KR | 10-2021-0090604 | A | |
| JP | 2015-214450 | A | 03 December 2015 | (Family: none) | | | |
| JP | 2013-193916 | A | 30 September 2013 | (Family: none) | | | |
| JP | 2019-119672 | A | 22 July 2019 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003308845 A
- JP 2012009227 A